## Europäisches Patentamt

(19) **European Patent Office**

**Office européen des brevets**

(11) Publication number: **0 104 822**
**B1**

(12) # EUROPEAN PATENT SPECIFICATION

(45) Date of publication of patent specification: **31.01.90**

(51) Int. Cl.⁵: **G 11 B 15/60,** H 04 N 5/78

(21) Application number: **83305258.2**

(22) Date of filing: **08.09.83**

(54) Video tape recorders.

(30) Priority: **17.09.82 GB 8226568**

(43) Date of publication of application:
**04.04.84 Bulletin 84/14**

(45) Publication of the grant of the patent:
**31.01.90 Bulletin 90/05**

(84) Designated Contracting States:
**AT BE CH DE FR GB IT LI LU NL SE**

(56) References cited:
**EP-A-0 022 298**
**DE-A-2 411 795**
**DE-A-2 441 663**
**DE-A-3 127 340**
**US-A-4 060 840**
**US-A-4 361 857**

(73) Proprietor: **KUDELSKI S.A.**
**Route de Genève 22**
**CH-1033 Cheseaux-sur-Lausanne (CH)**

(73) Proprietor: **AMPEX CORPORATION**
**401 Broadway M.S. 3-35**
**Redwood City California 94063-3199 (US)**

(72) Inventor: **Kudelski, Stefan**
**Chemin de la Croix**
**CH-1052 Le Mont-sur-Lausanne (CH)**
Inventor: **Rosselet, Ernest**
**CH-1049 Assens (CH)**

(74) Representative: **Horton, Andrew Robert Grant et al**
**BOWLES HORTON Felden House Dower Mews High Street**
**Berkhamsted Hertfordshire HP4 2BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background to the Invention

This invention relates to video tape recording and/or playback and in particular to a machine in which a tape is guided in a predetermined path for scanning by a recording or playback head in a multiplicity of tracks extending obliquely across the tape.

In order to attain a sufficiently high head-to-tape speed for the recording or playback of video signals, it is well-known to transport a tape longitudinally and to guide the tape past a scanner by means of which the recording or playback head is caused to rotate. The most usual form of machine includes a drum-like guide member around which the tape is wrapped for scanning by the recording or playback head. Various arrangements have been proposed, differing from each other essentially in the wrap angle of the tape around the guide drum and the configuration of the tape's path.

### Summary of the Invention

It is known (from C-format machines) to provide a video tape machine including a cylindrical scanner drum and a system of guides for guiding tape in a path extending helically around the drum for nearly 360 degrees from an entrance guide to an exit guide, the tape executing a large change in direction around the entrance guide and the exit guide. The invention is characterised in that either the entrance guide or the exit guide or each such guide comprises a pair of generally parallel guide rollers around which the tape passes successively so as to execute the respective large change in direction, one guide roller of the pair being disposed close to the drum so as to define the respective end of the helical path and the other guide roller of the pair being spaced laterally from the said one guide along a line generally radial to the drum, and means are provided for adjusting the tilt, relative to the drum, of each guide roller in the said pair in a respective plane generally tangential to the drum.

The invention mainly concerns a video tape recorder in which the tape path extends around the main guide drum in a helical path of which the wrap angle is just less than 360 degrees, typically about 344 degrees, the tape path making a large change of direction at both the start and the termination of the helical path of the tape around the drum. The term "large" is generally intended to mean very substantially greater than a right angle and normally to refer to an angle approaching 180 degrees. Such a configuration is convenient for compactness of the recorder but is known to be difficult in control. It has accordingly been the preferred practice hitherto to limit the said change of direction to less than 100 degrees, thereby sacrificing the compactness which the use of a larger change of direction would provide.

As previously indicated, the present invention provides at either the exit or the entrance to a helical path of a tape around a scanning drum, and preferably at both the entrance and exit, a respective pair of generally parallel roller guides around which the tape passes successively, the tape executing a large total change of direction around the or each pair of guides. One guide in the or each pair of guides is disposed, in the normal operation of the recorder, close to the drum around which the tape is helically wrapped, the other of the two guides in the same pair being disposed, with reference to the drum, radially outboard of the first guide of the pair. This feature facilitates, as will be explained more fully, greater control of the tape while enabling the retention of the compactness associated with a transport in which the changes of direction of the tape approaching and leaving the scanner drum are large as aforesaid. It is for example feasible to limit the wrap angle around any one of the entrance or exit guides to less than approximately 90 degrees.

An important aim in designing a tape transport mechanism for moving tape between tape storage reels and helically around a tape guide drum is to design and arrange the tape engaging mechanisms in the tape path between the tape storage reels so that the tape tension across the tape guide drum can be maintained constant in the presence of variations in friction and tape tension elsewhere along the tape path. For this purpose the tape transport mechanism is preferably designed so that as the tape enters, passes around and exits the helical path around the scanner drum it does not encounter influences which cause variation in tape tension. Because the tape executes a helix as it passes about the tape guide drum, it necessarily must be transported between two parallel planes at separated levels as it is moved between the supply and take-up reels. The supply reel normally lies in one of the two parallel planes and the take-up reel normally lies in the other. As a result, the plane of the tape must twist as it moves between the supply and take-up reels. Execution of the proper twist, level change, entrance angle and exit angle is potentially influenced by variations of tape tension and friction along the tape transport path between the supply and take-up reels. The amount of required twist is determined by four parameters: helix angle about the tape guide drum, the rise of the tape around the tape guide drum (or the distance separating the aforementioned parallel planes), the entrance angle at which the tape starts its path around the tape guide drum, and the exit angle at which the tape leaves its path around the tape guide drum. The ability to maintain the tape tension constant across the tape guide drum and the tape free of influences that cause variations in such tape tension as it enters, passes around and exits the helical path about the scanner drum depends upon the effectiveness of the control of the twist, level change, entrance angle and exit angle. The use of pairs of rotatable roller guides at the entrance and exit provides the ability to control, with a substantial measure of independence, the entrance angle, exit angle and level change. This control enables precision adjustment of the aforementioned parameters whereby the proper tape conditions can be maintained across the tape guide drum even in the presence of variations in friction and tape tension elsewhere along the tape transport path between the supply and take-up reels.

So far as a pair of guides at the entrance of the tape into the helical path is concerned, adjustment of the tilt of the inner of the two guides may alter the angle of entry of the tape with respect to the drum whereas alteration of the tilt of the outer roller guide of the pair may alter the "height" of the tape, that is to say the axial position of the tape with respect to the drum. Correspondingly, so far as a pair of guides disposed at the exit from the helical tape path is concerned, alteration of the inner of the two guides may alter the angle at which the tape leaves the drum and alteration of the outer of the two guides can alter the height of the tape at the exit to the helical path.

Another feature of the present invention concerns the guiding of the tape in its path around a scanner. It is possible, for helical scan machines, to define this path by a helically extending shoulder which is engaged to one edge of the tape, but such a shoulder provides only a datum and does not maintain the tape against the datum. The tape may be come incorrectly positioned in either of two ways: it may be at an incorrect height relative to the scanner or at an incorrect angle relative to the scanner. A further object of the invention is to guide the tape without requiring engagement of both its upper and lower edges by, for example, a grooved roller guide.

Accordingly, it is preferred that at least one of the roller guides be of tapered or conical form so that the tape is given a slight lateral movement sufficient to maintain the tape against the shoulder or other fixed guide member which defines the path of the tape around the scanner. Thus the tapered guide significantly assists in maintaining the tape in its correct path and resists movement of the tape away from the datum represented by, for example, the helical shoulder.

If controlled tape transport only in a forward direction is required then a tapering or conical form is required only for a guide or guides at the normal entrance to the helical path. However, such a form is preferable for the entrance guides and the exit guides if the tape is to be directionally transported under controlled conditions.

Brief Description of the Accompanying Drawings

Figure 1 is a simplified schematic diagram of the principal parts of a video tape recorder;

Figure 2 is a simplified view of a scanning drum and entrance and exit guides associated therewith;

Figure 3 is a simplified part sectional view of a tilted scanning drum;

Figure 4 is a sectional view in plan of a guide assembly in accordance with the invention;

Figure 5 is a sectional view in elevation of the guide assembly shown in Figure 4; and

Figure 6 is a schematic diagram of a servomechanism for the control of the tilt of a guide roller in the guide assembly.

Detailed Description of the Preferred Embodiment

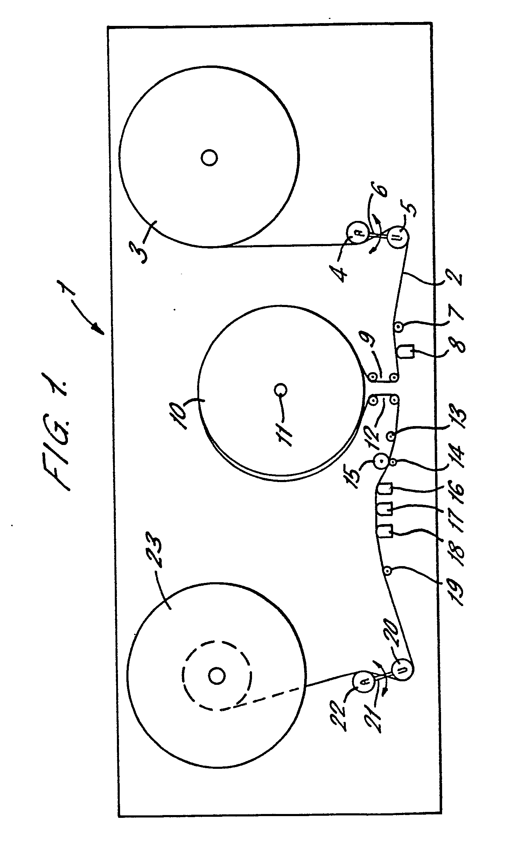

Figure 1 illustrates in simplified form the principal parts of a video tape recorder. As is shown in Figure 1, the recorder 1 is intended for recording signals on or playing back signals from a magnetic tape 2 which is supplied by a supply reel 3 driven by a motor, not shown for convenience. From the supply reel the path of the tape 2 extends around a rotatable guide post 4 and thence to a rotatable guide 5 which is carried at one end of an arm 6 mounted coaxially with the guide 4. The pivoted arm provides sensing of the tension of tape in a loop extending around the guide 5, it being apparent that if the tension in the tape of this loop increases, the arm 6 will rotate. The rotation of the arm can be sensed by any convenient, known means and used in known manner to control a motor which drives the reel 3 in order to maintain a substantially constant tension in the length of tape in the loop.

From the guide 5 the path extends past a guide post 7 and a video erase head 8 to a pair of guides 9 controlling the entrance of the tape to a helical path extending around a drum 10 of which the axis 11 is slightly tilted relative to the general plane of the path of the tape extending from the supply reel to the drum. Within the drum is a motor driving around the periphery of the drum a scanning head for the scanning of the tape in oblique tracks. At the end of the helical path of the tape around the drum the tape passes around a pair of guides 12 and extends past a guide 13 and a capstan 14 which is provided with a pinch roller 15 for the maintenance of the tape in close proximity to the capstan. The tape path extends from the capstan past erase, audio and control track heads 16 to 18 and then past a further fixed guide 19, a guide 20 at one end of a pivoted arm 21 rotatable about a pivot and a guide 22 which is coaxial with the pivot and is close to a take-up reel 23. The guide 20 acts in a manner similar to the guide 5, the angular position of the arm 21 providing a measure of the tension in the loop of tape between the guides 19 and 22 and providing a control for a servomechanism (not shown) which drives the take-up reel 23 to maintain the tension in the latter loop of tape substantially constant.

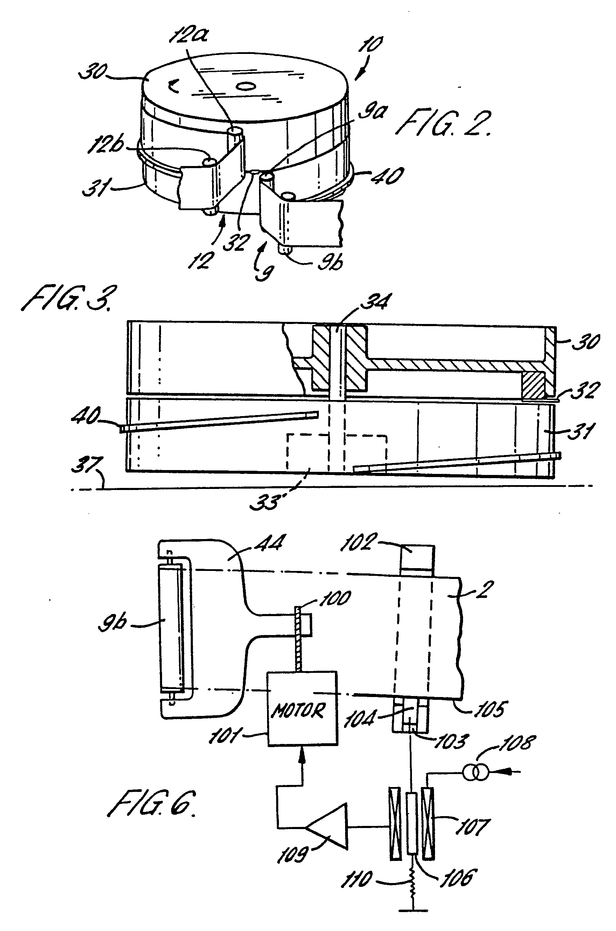

Figure 2 is a simplified view of the drum 10 and its associated entrance and exit guides. The tape 2 approaches the capstan by way of the pair of guides 9, executing a turn of approximately 90° around the outer guide 9b which, with respect to the drum 10, is disposed radially outwardly of the inner guide 9a of the pair of guides 9. The inner guide 9a about which the tape executes a turn of approximately 90° is close to the periphery of the drum 10 and defines the entrance to the tape's helical path around the drum 10. The exit from this helical path is defined by the inner exit guide 12a, the outer exit guide 12b being disposed, with respect to the drum, radially outwardly of the inner guide 12a. As for the pair of entrance guides the tape executes a total turn of approximately 180° around the pair of exit guides. The inner guides 9a and 12a are disposed close to the periphery of the drum to define a "wrap-around" angle which is just less than 360°, usually about 344°. In ordinary tape recorders of this type there is a single entrance guide and a single exit guide, which are normally disposed for rotation about respective upright axes, with respect to which the axis of the drum is slightly tilted. It will be well appreciated that the tape progresses in an upward direction in executing the helical path, and accordingly the height at which the tape moves towards the drum is substantially different from the height at which the tape moves on leaving the drum; in other words, the height of the tape at the entrance to the helical path is different from the height of the tape leaving the helical path.

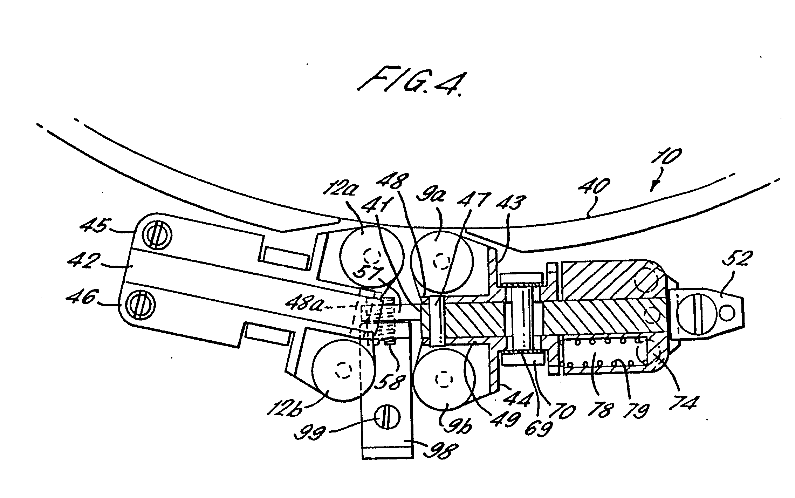

Figure 3 is a greatly simplified view of a typical guide drum. In this figure, the guide drum consists of an upper part 30 which is rotatable about the axis of the drum and a lower part 31 which is fixed. The upper part 30 may carry at least one recording and/or playback head 32 so that rotation of the upper part 30, which may be effected by a motor 33 driving a shaft 34 to which the upper part 30 is secured, drives the recording or playback head 32 at high speed around the periphery of the guide drum.

Extending around a fixed part of the drum is a ridge or shoulder 40 (shown also in Figure 2) which constitutes a fixed tape-edge guide member defining the path required for the tape around the drum for proper scanning. The ridge 40 defines the path of, and is positioned for engagement by, one edge only (in this embodiment the lower edge) of the tape. The ridge extends helically for almost all the desired path but stops short of the locations of the guides 9a and 12a.

As is well-known, the scanning head is driven around a generally circular path whereas the tape executes a helical movement oblique to that path. Thus the head 32 can scan the tape in a multiplicity of generally parallel tracks each extending obliquely, at a fairly narrow angle, to the length of the tape. Since there is a drop-out of, usually, 16° between the termination of the helical path and the beginning of it, the timing of recording of signals on the tape or playback of signals from the tape is normally arranged so that there need be no transfer of information during the drop-out interval. The construction and manner of operation of recording and playback control circuits for this purpose are well-known and will not be described.

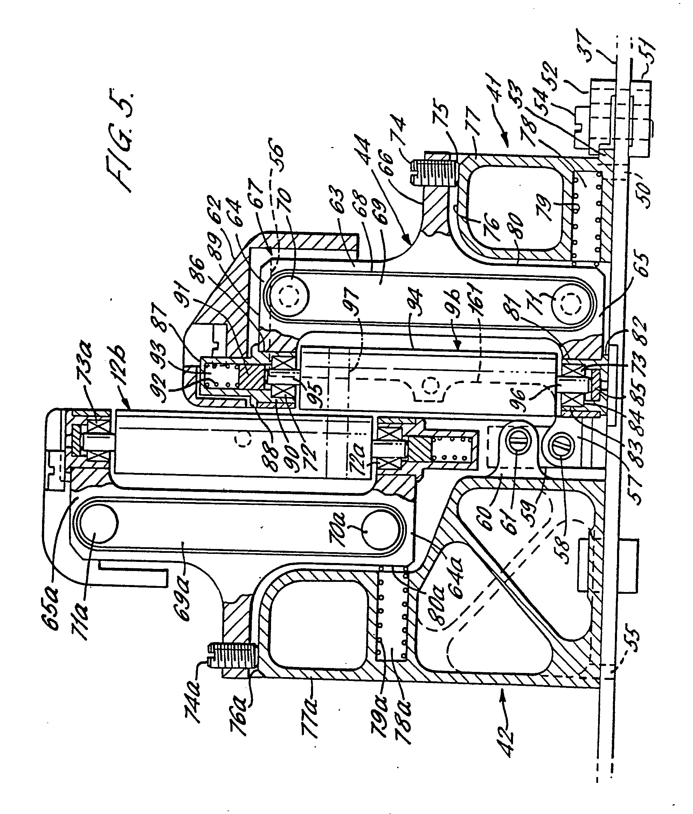

Figures 4 and 5 illustrate a preferred construction for the assembly of guides disposed at the entrance of and exit from the helical path of the tape around the drum 10.

As may be seen most easily in Figure 4, the guide assembly comprises, in this embodiment, two pairs of roller guides. The entrance pair of guides comprises the first roller guide 9a which is disposed close to the periphery of the adjacent guide drum 10, of which only the nearby part is shown in Figure 4. This guide 9a is mounted for rotation about an axis which is upright relative to the deck (37) of the machine and is, by virtue of the tilting of the drum 10, slightly tilted with respect to the axis of the drum 10. The entrance pair of guides also includes the guide 9b, which is mounted for rotation about an axis substantially parallel to that of the guide 9a. The two guides 9a and 9b are spaced apart in a direction substantially radial with respect to the axis of the guide drum 10.

Likewise, the inner guide 12a of the exit pair of guides 12 is mounted for rotation close to the periphery 40 of the adjacent guide drum 10 and about an axis which is upright relative to the deck 37. The outer exit guide 12b is mounted for rotation about an axis substantially parallel to the axis of the guide 12a but spaced apart from it in a direction radially of the drum 10.

The mounting for the entrance pair of guides 9a and 9b comprises a structure having three principal parts, namely a central support 41 and two carriers 43 and 44 of which the carrier 43 provides an adjustable mount for the guide 9a and the carrier 44 provides an adjustable mount for the guide 9b. In somewhat similar fashion, except for a difference in the height at which the respective guides are positioned, the mounting for the exit guides 12a and 12b comprises a central support 42 at each side of which is mounted one of two carriers 45 and 46, of which the carrier 45 provides an adjustable mount for the guide 12a and the carrier 46 provides an adjustable mount for the guide 12b. The two carriers 43 and 44 are pivotable with respect to the intermediate support 41 by means of an axle 47 which passes through the intermediate support 41 and is received by forward extensions 48 and 49 of the carriers 43 and 44 respectively and which provides for the carriers 43 and 44 a pivot axis which is transverse to the axes of rotation of the guides 9a and 9b, passes through the central transverse plane of each of these guides but is slightly offset from the aforementioned axes of both guides. In like manner, the axle 47a provides a pivot axis for each of the carriers 45 and 46 relative to their intermediate support 42, this pivot axis being transverse to the axes of rotation of the guides 12a and 12b, passing through the central transverse plane of each of these guides and being slightly offset from the rotary axes of the two guides 12a and 12b.

As will be apparent from Figure 5, the guides 12a and 12b are at a greater height than the guides 9a and 9b to accommodate the progression of the helical path of the tape relative to the axis of the drum 10. However, the pairs of guides overlap in the axial direction, the general plane in which the scanning head 32 rotates intersecting the lower part of the guides 12a and 12b and the upper part of the guides 9a and 9b.

Although a construction in which only two guides, for example the guides 9a and 12a, are employed is feasible, it is preferable to employ a pair of entrance guides around which the tape passes in succession and a pair of exit guides, around which the tape passes in succession, in order to facilitate the adjustment or control of the angle and height of the tape path, to reduce the load on the bearings for any single guide and to avoid an excessive wrap angle around any one of the entrance or exit guide rollers.

An important feature of the present invention in many of its aspects is the conical form of at least one and preferably all the roller guides 9a, 9b, 12a and 12b. The taper could be in the range from 0°5' of arc to 0°25' of arc, but is preferably in the range from 10' to 20'; a taper of 15' has been found most suitable. Preferably each guide that is tapered tapers in the direction in which the helical path progresses around the drum so that in the arrangement shown in the Figures, the tapered guides are of larger diameter at the bottom than at the top. This provision is advantageous because the guides impart to the tape a slight tendency to move towards the end of larger diameter and this movement counteracts any tendency for the height of the tape path to rise up the drum. Moreover, there is considerable resistance to a disturbance of the tape and thus if the tape is disturbed so as to have a lateral movement causing it to progress upwardly of the drum, the form of the guides tends to restore the tape to its original path. Preferably the action of a conical guide is enhanced by making more than one and preferably all the guides conical, tapering similarly, but other arrangements, in which at least one of the guides tapers in the reverse sense, are possible.

Although the tapering of the guides is beneficial independently, it does provide an additional degree of control if at least one (and preferably more than one) guide is tiltable in order to control the tape path.

As has already been indicated, the guides 9a, 9b, 12a, and 12b are tiltable. The tilting of each of the guides produces a slightly different effect and although the effects are not entirely independent, they are sufficiently so to provide a versatile means of controlling the tape path. In particular, alteration of the tilt relative to the drum of the inner entrance guide 9a adjusts the angle of attack of the tape relative to the drum at the entrance to the helical path. Alteration of the tilt of the outer entrance guide 9b will adjust the height at which the tape path commences. The effect of tilting of the exit guides is similar, but relate to the angle of the tape path at the exit thereof and the height of the tape at the exit.

In the specific embodiment illustrated in Figure 5, as will be described, the tilting of the roller guides is intended to be manually adjustable but then remain fixed during normal operation. However, servo-mechanical control of the tilt of the roller guides, particularly the outer guides 9b and 12b is feasible, as will be described with reference to Figure 6.

Figure 5 illustrates in more detail the manner in which the guides are mounted and the means by which the tilting of the guides can be adjusted.

The intermediate support 41 for the entrance guides rests on the deck 37 and at its rear has a downwardly extending spigot 50 which engages an aperture in the deck. This arrangement provides a means by which the intermediate support 41 and accordingly the whole of the entrance guide assembly can pivot about the axis of the spigot 50. Such pivoting may be desirable for repair and/or servicing but also may be useful in the event that it is desired to pivot the entrance guide assembly (and the exit guide assembly) away from the scanning drum 10 during an automatic loading operation with which the invention is not primarily concerned. However, it is preferred that the specific embodiment of the invention be compatible with an automatic operation for the threading of the tape around the entrance and exit guide and the drum 10. The rear part of the intermediate support 41 is clamped to the deck 37 by means of a clamp comprising two halves 51 and 52 which engage the underside of the deck and the upper side of the deck and a rebate 53 on the support 41, the two halves 51 and 52 of the clamp being secured together and secured to the deck by means of a bolt 54. Likewise, the intermediate support 42 for the exit guide assembly has a downwardly extending spigot 55, similar to the spigot 50, and engaging an aperture in the deck 37 so as to enable the intermediate support 42 and accordingly the whole of the exit guide assembly to pivot about the (upright) axis of the pivot for purposes similar to that of the pivoting of the entrance guide assembly.

The intermediate support 41 extends across the deck to a foot 57 which carries an adjustment screw 58 (shown in ghost in Figure 4) engaging a post 59 (Figure 5), the post being omitted in Figure 4 for the sake of simplicity. The screw 58 by its engagement with the post limits the pivoting movement of the entrance guide assembly in a sense towards the drum and the screw 58 in cooperation with the post 59 provides a means of adjusting the location of the inner roller guide 9a relative to the periphery 40 of the drum 10 in the direction generally radially of the drum. In like manner, the intermediate support 42 for the exit guide assembly extends from the pivot formed by the spigot 55 to a foot 60, disposed above the foot 57 but engaging the same post 59, the foot 60 providing a mounting for an adjustment screw 61 engaging the post 59. This adjustment screw thus provides a means for adjusting the end position of the pivotal movement of the exit guide assembly and in particular enables the separation of the inner exit guide 12a relative to the surface 40 of the drum to be adjusted.

The intermediate support 41 for the entrance guide assembly extends upwardly, in a plane from, and closer to the spigot 50 than is the foot 57, the front surface of the intermediate support being shown at 161. To the top surface 56 of the support is secured a cover 62, which extends laterally over the location of top bearings for each of the guides 9a and 9b (to be described).

The carriers 43 and 44 together with their respective guides are similar, the carriers 43 and 44 being mirror images of each other. Only one is shown in Figure 5, the other being disposed immediately behind it, and only the carrier 44 need be described.

The carrier is in the general form of a rectangular C, having a stem 63 and upper and lower limbs 64 and 65 and a rearward extension 66. Extending down the outer side 67 of the stem 63 of the carrier, parallel with the guide 9b, is a channel 68. Disposed in this channel is a spring link 69 which is held in place by a top bolt 70 and a lower bolt 71. The bolts pass through larger diameter holes in the carriers and hold another link (not shown), each link 69 bearing against the adjacent side surface of the respective carrier and pressing the carrier against the support 41.

As will be described later, the upper limb 64 of the carrier 42 carries a top bearing 72 for the guide 9b and the lower limb 65 carries a lower bearing 73 for the guide 9b.

To the rear of the "C" the member 44 has, as previously mentioned, a rearward extension 66, through which is threaded a screw 74 of which the lower end 75 bears on the top surface 76 of a hollow box-like frame member 77 which is formed integrally with and extends laterally on each side of the central part of the intermediate support 41. In the lower part of this box-like frame member 77 is a horizontal blind recess 78 in which is disposed a helical compression spring 79 bearing on the rear surface 80 of the stem 63 of the carrier 44.

Thus the screw 74 provides a means for adjusting the tilt of the guide 9b and the spring 79 provides a means for biassing the carrier towards the desired angular position and thus serves as a means for maintaining the desired tilt of the guide 9b.

The carrier 43 is, in this embodiment of the invention, movable to a limited extent independently of the carrier 44 so that the guides 9a and 9b are tiltable independently. The limited independent movement is possible because the bolts 70 and 71 are smaller in diameter than the holes by means of which the bolts 70 and 71 pass through the carriers 43 and 44.

The lower limb 65 of the carrier 44 has an aperture 81 in which a bushing 82 is disposed. The bushing has a stepped bore 83 of which a shoulder 84 supports the bearing 73. A sapphire seat 85 is disposed at the bottom of the bore 83. The upper limb 64 has an aperture 86 in which is mounted a cylindrical insert 87 which has a central shoulder 88 which rests on the top surface 89 of the carrier 44 and serves to define the location of the insert. The insert has a stepped recess 90 in the outer part of which is mounted the bearing 72 and in the inner, rather longer, part of which is mounted a sapphire seat 91 which is biassed downwardly by means of a helical compression spring 92 engaging the inner blind end 93 of the recess 90.

The roller 9b has a main cylindrical portion 94 and two end spigots 95 and 96. The upper spigot 95 rotates in the bearing 72 in the upper limb 64 of the carrier 44 and the end of the spigot, which is rounded, is engaged by the sapphire seat 91. The lower spigot 96 is received by and is rotatable in the bearing 73 in the lower limb 65 of the carrier 44 and the spigot end, which is rounded, rests on the sapphire seat 85. The cylindrical portion 94 of the guide 9b is tapered as aforesaid.

Although it is not necessary for the guide 9b, the guide 9a has near its upper end a shallow peripheral groove which is shown for convenience by the dashed lines 97 for the guide 9b. This groove is provided in the region where the scanning head 32 passes adjacent the guide 9a and provides a means of ensuring that the scanning head, which must protrude slightly from the periphery of the drum 10, does not strike the guide 9a despite the necessary close proximity of the guide 9a to the periphery of the scanning drum.

The mounting of the guides 12a and 12b and their carriers 45 and 46 is generally similar to that of the guides 9a and 9b and the carriers 43 and 44 and indeed, in this preferred embodiment of the invention, the carriers 45 and 46 and their guides are exactly the same as the carriers 43 and 44 except that they are used upside down; this enables a reduction in the number of different parts to be achieved. The assembly so far as the exit guides need not, therefore, be described in detail but the drawing shows the main parts thereof referenced with the addition of the suffix "a" similarly to the corresponding parts of the entrance guide assembly.

Thus the carrier 46 has a lower limb 64a corresponding to the upper limb 64 of the carrier 44 and an upper limb 65a corresponding to the lower limb 65 of the carrier 44. The carrier 46 has a spring link 69a secured in position by the screws 70a and 71a. The upper limb 65a of the carrier 46, corresponding to the lower limb 65 of the carrier 44, carries the bearing 73a whereas the lower limb 64a of the carrier 46, corresponding to the upper limb 64 of the carrier 44, carries the bearing 72a, the guides 12b being rotatable in the bearings 72a and 73a being mounted between sapphire seats as is the guide 9b.

Likewise, the adjustment screw 74a which engages the top surface 76a of a frame member 77a provides the means for adjusting the angular position of the carrier 46 and thus the tilt of the guide 12b. The frame member 77a is of greater height than the frame member 77 but likewise carries a horizontal blind recess 78a in which is mounted a helical compression spring 79a bearing on the rear surface 80a of the C-shaped frame constituted by the carrier 46 and providing a means for biasing the carrier into the position determined by the adjustment screw 74a. As has been indicated, the mounting of the guide 12a and its adjustment is similar to that for the guide 12b, the carriers 45 and 46 being mirror images of each other.

It is desirable to provide some means for holding the intermediate supports 41 and 42 so that angular rotation thereof away from the post 59 is resisted. In the present embodiment, this means is illustrated as a plate 98 (Figure 4) engaging the foot 57 of the intermediate support 41 and is secured to the deck 37 by means of a screw 99. A similar plate may be provided for the maintenance of the angular position of the intermediate supports 42 and thereby of the exit guide assembly.

It will be apparent that although in the present embodiment of the invention the adjustment of the tilt of the guides is manual, servo-mechanical control of the tilt is feasible. Figure 6 illustrates in simplified schematic form one suitable arrangement for this purpose, as applied to the control of the tilt of the outer entrance guide 9b. It will be recalled that this guide controls the height of the start of the helical path of the tape around the drum. It is, according to the arrangement shown in Figure 6, associated with means which sense variation in the height of the tape above the tape deck 37 and which drive the carrier 44 so as to adjust the tilt of the guide 9b to compensate for variation of the height of the path of the tape and to regulate that height to a desired value. In particular, as shown in Figure 6, the adjustment screw 74 is replaced by a lead screw 100 driven by a motor 101. A fixed guide 102 disposed slightly upstream of the tape path from the guide 9b accommodates in a channel 103 a sapphire seat 104 on which the lower edge 105 of the tape 2 runs. This sapphire seat is rigidly linked to an armature 106 of a differential transformer 107 which is energised from a source 108. The sapphire seat and the armature 106 are biassed by a return spring 110. The stiffness of the spring is chosen according as the controlling parameter for the servo-mechanism is to be the height of the tape above the deck or the pressure of the tape on the sapphire seat 104. In the former case the spring 110 should be not particularly stiff but in the latter case the spring should be stiffer.

The output of the differential transformer 107 feeds an amplifier 109 providing energisation for the motor 101 and consequent drive of the lead screw 100. Thus, as the pressure of the bottom edge of the tape on the sapphire seat increases, the motor is energised to drive the lead screw 100 to adjust the tilt of the roller guide 9b and reduce that downward pressure.

## Claims

1. A video tape machine including a cylindrical scanner drum (10) and a system of guides (9, 12, 40) for guiding tape in a path extending helically around the drum for nearly 360 degrees from an entrance guide to an exit guide, the tape executing a large change in direction around the entrance guide and the exit guide, characterised in that either the entrance guide or the exit guide or each such guide comprises a pair (9a, 9b or 12a, 12b) of generally parallel guide rollers around which the tape passes successively so as to execute the respective large change in direction, one guide roller (9a or 12a) of the pair being disposed close to the drum so as to define the respective end of the helical path and the other guide roller (9b or 12b) of the pair being spaced laterally from the said one guide along a line generally radial to the drum, and means (41, 43, 44, 47) are provided for adjusting the tilt, relative to the drum, of each guide roller in the said pair in a respective plane generally tangential to the drum.

2. A machine according to claim 1 in which the means for adjusting comprises a respective carrier (43, 44) for each guide roller of the pair, a support (41) for the carriers and means (47, 74) for adjustably pivoting each carrier with respect to the support.

3. A machine according to Claim 2 which the means for adjusting includes means (79) for biasing a carrier towards a defined position.

4. A machine according to any of Claims 1 to 3, in which at least one of the guide rollers is tapered to resist movement of the tape away from a datum defining the helical path.

5. A machine according to Claim 4 in which both the guide rollers in a pair are tapered in a similar sense.

6. A machine according to Claim 4 or Claim 5 in which the taper is in the range from ten to twenty minutes of arc.

7. A machine according to any of Claims 1 to 6 in which the guide rollers of the said pair provide in combination approximately 180 degrees of turn in the direction of movement of the tape.

8. A machine according to any of Claims 1 to 7, further comprising means (101, 110) responsive to the height of the tape for controlling the tilt relative to the drum of at least one of the guides.

9. A machine according to any of Claims 1 to 8, in which the entrance and exit guides each comprise a respective pair of said guide rollers (9a, 9b; 12a, 12b).

## Patentansprüche

1. Videobandgerät mit einer zylindrischen Abtasttrommel (10) und einer Anordnung von Führungen (9, 12, 40) zum Führen des Bandes über einen Weg, der schraubenförmig um die Trommel über nahezu 360° von einer Eingangsführung bis zu einer Ausgangsführung führt, wobei das Band eine große Änderung in der Richtung um die Eingangsführung und die Ausgangsführung erfährt, dadurch gekennzeichnet, daß entweder die Eingangsführung oder die Ausgangsführung oder jede derartige Führung ein Paar (9a, 9b, oder 12a, 12b) von im wesentlichen parallelen Führungsrollen umfaßt, um die das Band der Reihe nach läuft, so daß es die jeweilige große Änderung in der Richtung erfährt, wobei eine Führungsrolle (9a oder 12a) des Paares nahe an der Trommel angeordnet ist, so daß das jeweilige Ende des schraubenförmigen Weges begrenzt ist, und die andere Führungsrolle (9b oder 12b) des Paares seitlich im Abstand von der einen Führung längs einer Linie angeordnet ist, die im wesentlichen radial zur Trommel verläuft, und Einrichtungen (41, 43, 44, 47) vorgesehen sind, um die Schrägstellung jeder Führungsrolle in diesem Paar bezüglich der Trommel in einer jeweiligen Ebene im wesentlichen tangential zur Trommel einzustellen.

2. Gerät nach Anspruch 1, bei dem die Einrichtungen zum Einstellen einen jeweiligen Träger (43, 44) für jede Führungsrolle des Paares, einen Halter (41) für die Träger und Einrichtungen (47, 74) zum einstellbaren Schwenken jedes Trägers bezüglich des Halters umfassen.

3. Gerät nach Anspruch 2, bei dem die Einrichtungen zum Einstellen Einrichtungen (79) zum Vorspannen eines Trägers in Richtung auf eine bestimmte Position einschließen.

4. Gerät nach einem der Ansprüche 1 bis 3, bei dem wenigstens eine der Führungsrollen konisch ausgebildet ist, um einer Bewegung des Bandes weg von einer Bezugslinie, die den schraubenförmigen Weg bestimmt, einen Widerstand entgegenzusetzen.

5. Gerät nach Anspruch 4, bei dem beide Führungsrollen eines Paares in ähnlichem Sinn konisch ausgebildet sind.

6. Gerät nach Anspruch 4 oder 5, bei dem die Konizität im Bereich von 10 bis 20 Bogenminuten liegt.

7. Gerät nach einem der Ansprüche 1 bis 6, bei dem die Führungsrollen des genannten Paares kombiniert für eine Wendung in der Bewegungsrichtung des Bandes um 180° sorgen.

8. Gerät nach einem der Ansprüche 1 bis 7, welches weiterhin Einrichtungen (101, 110) umfaßt, die auf die Höhe des Bandes ansprechen, um die Schrägstellung wenigstens einer der Führungen relativ zur Trommel zu steuern.

9. Gerät nach einem der Ansprüche 1 bis 8, bei dem die Eingangs- und die Ausgangsführung jeweils ein jeweiliges Paar der Führungsrollen (9a, 9b, 12a, 12b) umfassen.

**Revendications**

1. Machine à bande vidéo comprenant un tambour cylindrique (10) de balayage et un système de guides (9, 12, 40) pour guider une bande sur un parcours s'étendant hélicoïdalement autour du tambour sur près de 360 degrés depuis un guide d'entrée jusqu'à un guide de sortie, la bande décrivant un important changement de direction autour du guide d'entrée et du guide de sortie, caractérisée en ce que soit le guide d'entrée, soit le guide de sortie ou chacun de ces guides comprend une paire (9a, 9b ou 12a, 12b) de galets guides généralement parallèles autour desquels passe successivement la bande de manière à exécuter l'important changement de direction respectif, un premier (9a ou 12a) des galets de la paire étant disposé près du tambour de façon à déterminer l'extrémité respective du parcours hélicoïdal et l'autre galet guide de la paire (9b ou 12b) étant espacé latéralement dudit premier guide selon une ligne généralement radiale par rapport au tambour, et des moyens (41, 43, 44, 47) sont prévus pour régler l'inclinaison, par rapport au tambour, de chaque galet guide de ladite paire dans un plan respectif généralement tangentiel au tambour.

2. Machine selon la revendication 1, dans laquelle les moyens de réglage comprennent un porteur respectif (43, 44) pour chaque galet guide de la paire, un support (41) pour les porteurs et un moyen (47, 74) pour faire pivoter de manière réglable chaque porteur par rapport au support.

3. Machine selon la revendication 2 où les moyens de réglage comportent un moyen (79) pour solliciter un porteur vers une position définie.

4. Machine selon une quelconque des revendications 1 à 3, où au moins l'un des galets guides est effilé pour résister au mouvement de la bande dans le sens d'un écartement par rapport à une donnée définissant le parcours hélicoïdal.

5. Machine selon la revendication 4 où les deux galets guides d'une paire sont effilés de façon similaire.

6. Machine selon la revendication 4 ou 5 où l'effilement se situe dans la gamme de dix à vingt minutes d'arc.

7. Machine selon l'une quelconque des revendications 1 à 6 où les galets guides de ladite paire produisent en combinaison environ 180 degrés de rotation dans le sens de déplacement de la bande.

8. Machine selon une quelconque des revendications 1 à 7 comprenant en outre des moyens (101, 110) sensibles à la hauteur de la bande pour commander l'inclinaison par rapport au tambour de l'un au moins des guides.

9. Machine selon une quelconque des revendications 1 à 8 où les guides d'entrée et de sortie comprennent chacun une paire respective desdits galets guides (9a, 9b; 12a, 12b).

FIG. 1.

FIG. 2.

FIG. 3.

FIG. 6.

FIG. 4.

FIG. 5.

EP 0 104 822 B1